# EUROPEAN PATENT APPLICATION

(11) **EP 4 417 806 A1**
(43) Date of publication of application: **21.08.2024**
(21) Application number: 24151829.9
(22) Date of filing: 15.01.2024
(51) Int. Cl.: F02K 9/74, B64G 1/40

(54) **SATELLITE PROPULSION SYSTEM INCLUDING COMBUSTION CHAMBER AND ELECTRICAL ARC HEATER AND RELATED METHODS**

(30) Priority: 20.02.2023 US 202318111852
(71) Applicant: Eagle Technology, LLC, Melbourne, FL 32919 (US)
(72) Inventor: BAROCELA, Edward, Stafford, 22554 (US); MATLACK, Alexandra, Cavalier, 58220 (US); NI, Marcus, Rockledge, 32955 (US)
(74) Representative: Schmidt, Steffen J.

(57) **Abstract**

A hybrid propulsion engine for a satellite that includes a satellite housing and electronics carried by the satellite housing, may include a rechargeable electrical power source carried by the satellite housing. The hybrid propulsion engine may also include a combustible fuel supply carried by the satellite housing, and an engine housing defining a combustion chamber for fuel from the combustible fuel supply. The hybrid propulsion engine may also include an electrical arc heater associated with the combustion chamber and configured to supply additional heat from the rechargeable electrical power source, and an exhaust nozzle downstream from the combustion chamber.

## Description

### Technical Field

The present invention relates to the field of satellites, and, more particularly, to satellite propulsion and related methods.

### Background

A satellite is an object that is placed into orbit, typically Earth's orbit. One type of satellite is a low Earth orbiting (LEO) satellite, which orbits the Earth at a relatively low altitude. Another type of a satellite is a geostationary satellite. A geostationary satellite maintains relative positioning with respect to the Earth as it orbits.

A satellite may change or maintain its orbit using a propulsion system. One type of propulsion system is a chemical propulsion system that uses chemical reactions from a propellant to create thrust. A specific example of a propulsion system is a combustion propulsion system that combusts a fuel, for example, with an oxidizer to create thrust. Yet another type of propulsion system is an electric propulsion system. An electric propulsion system may include ion thrusters and/or electrothermal thrusters, such as, for example, arcjets.

A satellite has a useful life, for example, a duration of which it is expected to operate for its intended purpose. Many satellites may end their useful life based upon a lack of propellant, for example, to maintain orbit, rather than an onboard failure, such as an electronics failure.

U.S. Patent No. 10,287,036 to Lichtin et al. discloses an arcjet thruster system for a spacecraft that includes a power supply that includes a radio-frequency start power supply and a continuous direct-current power supply, each selectively coupled to electrodes of an arcjet for initiation and maintenance of an arc between the electrodes. A radio-frequency/direct-current control module may be provided for selectively coupling the radio-frequency start power supply and a continuous direct-current power supply. The radio-frequency start power supply may be used to initiate an arc that is then sustained by the continuous direct-current power supply.

U.S. Patent No. 9,242,747 to Burton et al. discloses an in-space propulsion system having mass and power scalability over a wide range and using advanced propellants. The system combines the fields of microdischarge physics and nonequilibrium plasmadynamics to reduce dramatically the size of electric thrusters by 1-2 orders of magnitude, which when coupled with micronozzles, that are electrically conducting or electrically insulating, result in high thrust and high thruster efficiency. The result may be scalable, low-cost, long-life distributable propulsion for control of femtosats, picosats, nanosats, microsats, and space structures. The concept is scalable from power levels of 1 W to several kilowatts with thrust efficiency approaching 60%.

Despite continuing advances in satellite propulsion systems, more advanced systems are also desirable, particularly to extend the useful life of a satellite.

### Summary

A hybrid propulsion engine for a satellite that includes a satellite housing and electronics carried by the satellite housing, may include a rechargeable electrical power source carried by the satellite housing. The hybrid propulsion engine may also include a combustible fuel supply carried by the satellite housing, and an engine housing defining a combustion chamber for fuel from the combustible fuel supply. The hybrid propulsion engine may also include an electrical arc heater associated with the combustion chamber and configured to supply additional heat from the rechargeable electrical power source, and an exhaust nozzle downstream from the combustion chamber.

The rechargeable electrical power source may include a rechargeable battery and at least one solar panel coupled thereto. The hybrid propulsion engine may be configured to generate propulsion for non-geostationary satellite orbit positioning, for example.

The electronics may include a controller and wireless communications circuitry coupled thereto, for example. The controller may be configured to operate the hybrid propulsion engine based on received wireless commands via the wireless communications circuitry.

The combustible fuel supply may include a chemical bipropellant fuel supply. The fuel may include a combustible fuel and an oxidizer, for example.

The hybrid propulsion engine may include coaxial fuel supply tubes extending within the combustion chamber to deliver the fuel therein. The hybrid propulsion engine may further include a spray nozzle within the combustion chamber and coupled to the coaxial fuel supply tubes.

A method aspect is directed to a method of operating a hybrid propulsion engine in a satellite. The satellite may include a satellite housing and electronics carried by the satellite housing. The method may include combusting fuel from a combustible fuel supply carried by the satellite housing in a combustion chamber defined by an engine housing of the hybrid propulsion engine. The method may also include operating an electrical arc heater associated with the combustion chamber to supply additional heat from a rechargeable electrical power source carried by the satellite housing.

### Brief Description of the Drawings

FIG. 1 is a schematic diagram of a satellite in accordance with an embodiment.
FIG. 2 is a more detailed schematic diagram of the satellite of FIG. 1.
FIG. 3 is a more detailed schematic diagram of the electronics of FIG. 2.
FIG. 4 is a more detailed schematic diagram of the rechargeable electrical power source of FIG. 2.

### Detailed Description

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

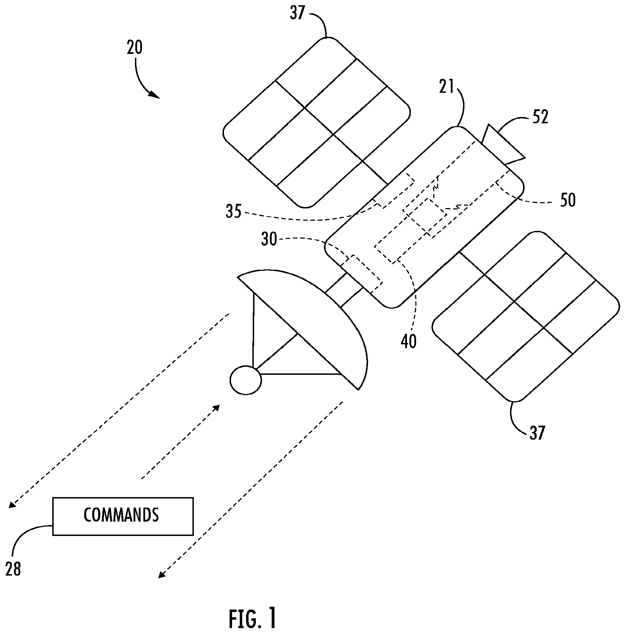

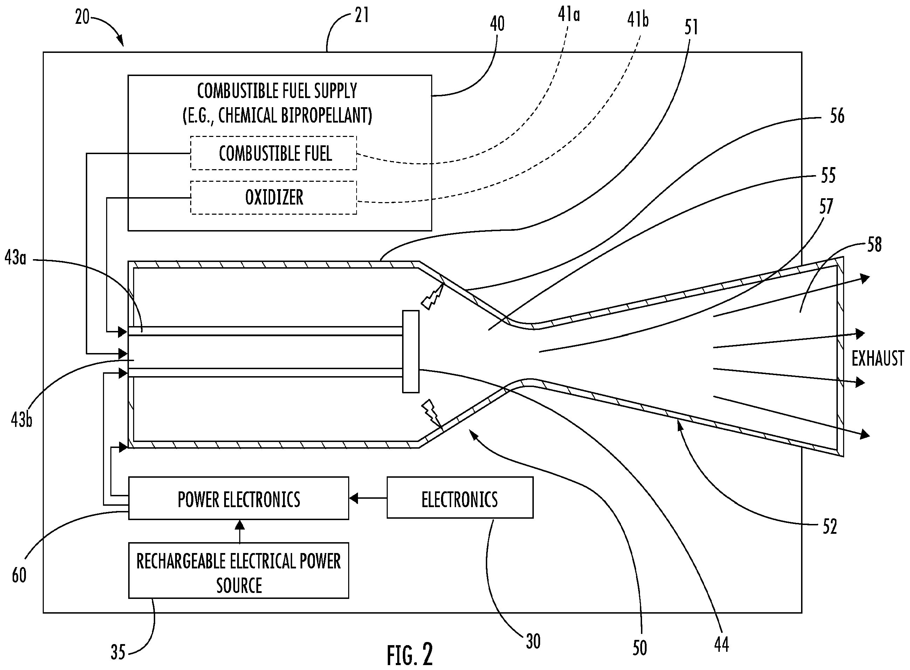

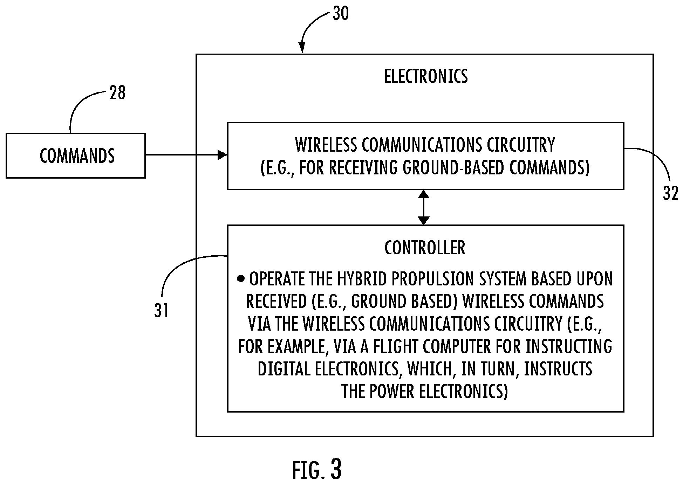

Referring to initially FIGS. 1-3, a satellite **20** includes a satellite housing **21.** Electronics **30** are carried by the satellite housing **21.** The electronics **30** may include a controller **31** and wireless communications circuitry **32** coupled to the controller (FIG. 3). More particularly, for example, the electronics **30** may include a flight computer and digital electronics that receive instructions from the flight computer. Commands **28** may be received via the wireless communications circuitry **32,** for example, and may be ground based commands received directly from the ground or relayed via another satellite. The commands may control selective operation of the satellite **20,** for example, its propulsion, as will be described in further detail below.

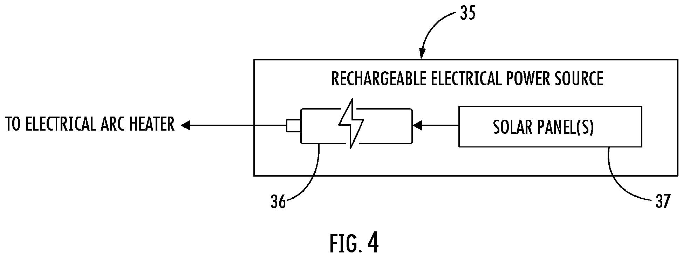

Referring additionally to FIG. 4, a rechargeable electrical power source **35** is carried by the satellite housing **21.** The rechargeable electrical power source **35** includes a rechargeable battery **36** and one or more solar panels **37** coupled to the rechargeable battery. The rechargeable electrical power source **35** may include other and/or additional power storage and supply elements, as will be appreciated by those skilled in the art. The rechargeable electrical power source **35** may be shared with that of or with respect to satellite function, or, alternatively, the rechargeable power source may be independent for functions that will be described in further detail below.

A combustible fuel supply **40** is carried by the satellite housing **21.** The combustible fuel supply **40** is illustratively in the form of a chemical bipropellant fuel supply and includes first and second fuel tanks **41a, 41b** to carry a combustible fuel, and an oxidizer, respectively.

The bipropellant fuel supply **40** is illustratively coupled to the engine housing **51** via first and second coaxial fuel supply tubes **43a, 43b** extending from the first and second fuel tanks **41a, 41b,** to within a combustion chamber **55** defined by the engine housing **51** of the hybrid propulsion engine **50** to deliver the combustible fuel, and the oxidizer therein. The combustion chamber **55** illustratively has a generally cylindrical shape with a frusto-conically shaped portion **56.**

The hybrid propulsion engine **50** also includes a spray nozzle **44** coupled to the first and second fuel supply tubes **43a, 43b** within the combustion chamber **55.** The spray nozzle **44** may be a shower head type of spray nozzle providing a spray of the combustible fuel and the oxidizer radially outwardly from the first and second fuel coaxial supply tubes **43a, 43b** within the combustion chamber **55** adjacent the frusto-conically shaped portion **56.** As will be appreciated by those skilled in the art, the combination of the combustible fuel and the oxidizer, when ignited, causes combustion such that heat and pressure are generated within the combustion chamber **55.** Other types of fuel distributing nozzles may also be used. While a bipropellant fuel supply **40** is described herein, it should be appreciated that the combustible fuel supply may be in the form of a monopropellant fuel supply in other embodiments.

The hybrid propulsion engine **50** is also carried by the satellite housing **21** to generate propulsion such as for non-geostationary satellite orbit positioning of the satellite **20.** An exhaust nozzle **52** is downstream from the combustion chamber **55,** and, more particularly, downstream from the frusto-conically shaped portion **56.** The exhaust nozzle **52** directs exhaust gas from the combustion chamber to provide thrust. Illustratively, the exhaust nozzle **52** has a frusto-conical shape so that pressurized exhaust gases flow from the combustion chamber **55** to the reduced-radius neck **57** of the exhaust nozzle and outwardly from the enlarged opening **58** of the exhaust nozzle.

An electrical arc heater defined by power electronics **60** and electrodes (nozzle **44** and adjacent portions of the combustion chamber **55**) supply additional heat to the gas within the combustion chamber **55.** Other configurations of electrodes may also be used in other embodiments. The electrical arc heater is powered from the rechargeable electrical power source **35.** The power electronics **60** may include, for example, one or more starter coils and one or more voltage regulators, for example.

As will be appreciated by those skilled in the art, operation of the electrical arc heater may advantageously provide additional thrust with a reduced or little additional fuel burn. For example, a typical conventional bipropellant thruster with thrusts in the 5-20 newton range (e.g., approximately 1-4 pounds) is used on many satellites. An electric thruster may be more efficient in terms of fuel consumption, but have relatively low thrust levels in the millinewton range (e.g., <0.01 pounds). With an electric thruster, exhaust is expelled with a purely electric of magnetic effect. As will be appreciated by those skilled in the art, the present satellite **20,** including the hybrid propulsion engine **50,** may provide thrust levels in the 5-10 newton range, but with higher fuel efficiency than a purely chemical bipropellant thruster.

Operation of satellites in non-geostationary satellite orbit positioning, for example, operation as a low-Earth orbiting (LEO) satellite, may be associated with challenges as it relates to space debris or junk. The area where LEO satellites are operated is increasingly subject to more space junk, for example, as older satellites are either decommissioned or become inoperable. In other words, the risk of a collision between an operating satellite and particles of space junk is increasing. However, in contrast, for example, to geostationary satellites where the time between identifying a particular collision threat and the potential collision may be in terms of days, oftentimes with LEO satellites, there may be only hours or minutes or between identification and the potential collision. Satellites in low earth orbit generally need higher thrust levels to adjust orbits, which has been increasingly important for collision avoidance.

While the hybrid propulsion engine **50** using just fuel combustion may move the satellite, the satellite **20** may be moved from any potential collision with any space junk more quickly by way of the additional heat added by the electrical arc heater. More particularly, a potential collision hazard may be identified on the ground, and wireless commands may be communicated to the satellite **20** via the wireless communications circuity **32** to cause the controller **31** to selectively operate the hybrid propulsion engine **50** to provide additional thrust to more quickly move the satellite **20.** In some embodiments, the controller **31** may selectively operate the hybrid propulsion engine **50** independently, or even the electrical arc heater (e.g., power electronics **60** and electrode(s)) independently from any wireless commands that may be received. For example, the controller **31** may operate the hybrid propulsion engine **50** with or without the electrical arc heater to operate on a schedule and/or scheduled time periods. With respect to the electrical arc heater, during periods of non-operation, the rechargeable battery **36** may be recharged, for example, in preparation of the next operational period. The rechargeable electrical power source **35** may permit the satellite to have a longer life with the same amount of propellant as will also be appreciated by those skilled in the art.

Advantageously, the electrical arc heater (e.g., by way of the power electronics **60** and electrode(s)) is powered independently from the combustible fuel that provides the combustion. This permits the hybrid propulsion engine **50** to be operated as a low thrust arcjet. Alternatively, the controller **31** may selectively operate the hybrid propulsion engine **50** without operating the electrical arc heater to operate as a chemical thruster, as will be appreciated by those skilled in the art. Accordingly, the satellite **20** may more quickly be operated to reduce chances of a collision with space debris, particularly as the amount of orbital debris increases.

A method aspect is directed to a method of operating a satellite **20.** The satellite includes a satellite housing **21,** electronics **30** carried by the satellite housing, and a rechargeable electrical power source **35** carried by the satellite housing. The satellite **20** also includes combustible fuel supply **40** carried by the satellite housing **21,** and a hybrid propulsion engine **50** carried by the satellite housing. The method includes combusting fuel from the combustible fuel supply **40** in a combustion chamber **55** defined by an engine housing **51** of the hybrid propulsion engine **50.** The method also includes operating an electrical arc heater associated with the combustion chamber to supply additional heat from the rechargeable electrical power source **35.**

While several embodiments have been described herein, it should be appreciated by those skilled in the art that any element or elements from one or more embodiments may be used with any other element or elements from any other embodiment or embodiments. Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A hybrid propulsion engine for a satellite comprising a satellite housing and electronics carried by the satellite housing, the hybrid propulsion engine comprising:
a rechargeable electrical power source carried by the satellite housing;
a combustible fuel supply carried by the satellite housing;
an engine housing defining a combustion chamber for fuel from the combustible fuel supply;
an electrical arc heater associated with the combustion chamber and configured to supply additional heat from the rechargeable electrical power source; and
an exhaust nozzle downstream from the combustion chamber.

2. The hybrid propulsion engine of Claim 1 wherein the rechargeable electrical power source comprises a rechargeable battery and at least one solar panel coupled thereto.

3. The hybrid propulsion engine of Claim 1 wherein the hybrid propulsion engine is configured to generate propulsion for non-geostationary satellite orbit positioning.

4. The hybrid propulsion engine of Claim 4 wherein the controller is configured to operate the hybrid propulsion engine based on received wireless commands via the wireless communications circuitry.

5. The hybrid propulsion engine of Claim 1 wherein the combustible fuel supply comprises a chemical bipropellant fuel supply.

6. The hybrid propulsion engine of Claim 6 wherein the hybrid propulsion engine comprises coaxial fuel supply tubes extending within the combustion chamber to deliver the fuel therein from the chemical bipropellant fuel supply.

7. A method of operating a hybrid propulsion engine for a satellite comprising a satellite housing and electronics carried by the satellite housing, the method comprising:
combusting fuel from a combustible fuel supply carried by the satellite housing and in a combustion chamber defined by an engine housing of the hybrid propulsion engine; and
operating an electrical arc heater associated with the combustion chamber to supply additional heat from a rechargeable electrical power source carried by the satellite housing.

8. The method of Claim 7 wherein the rechargeable electrical power source comprises a rechargeable battery and at least one solar panel coupled thereto.

9. The method of Claim 7 wherein the combusting of the fuel and the operating of the electrical arc heater generates propulsion for non-geostationary satellite orbit positioning.

10. The method of Claim 7 further comprising operating the hybrid propulsion engine based on received wireless commands via wireless communications circuitry.
